# EUROPEAN PATENT APPLICATION

(11) **EP 0 575 129 A1**
(43) Date of publication of application: **22.12.1993**
(21) Application number: 93304596.5
(22) Date of filing: 14.06.1993
(51) Int. Cl.: C01B 31/02

(54) **Sulfated fullerenes and preparation thereof**

(30) Priority: 19.06.1992 US 901050
(71) Applicant: EXXON RESEARCH AND ENGINEERING COMPANY, Florham Park, New Jersey 07932-0390 (US)
(72) Inventor: Miller, Glen Paul, Easton, PA 18042 (US); Chiang, Long Yong, Somerset, NJ 08873 (US); Millar, John Manuel, Pittstown, NJ 08867 (US)
(74) Representative: Fletcher Watts, Susan J.

(57) **Abstract**

Sulfated fullerenes are disclosed. They are prepared by sufficiently reacting fullerenes with fuming sulfuric acid. The sulfated fullerenes, containing primarily open chain and cyclic sulfate substituent groups, may also contain sulfonic acid groups, sulfone groups, hydroxy groups and mixtures thereof.

## Description

This invention relates to novel compositions of matter, sulfated fullerenes, and to the preparation thereof.

Diamond and graphite are two well known allotropic forms of carbon. Other allotropic forms of carbon, the fullerenes, have recently been synthesized in macroscopic quantities (see W. Kratschmer et al., Nature, 347, 354 (1990) ). Fullerenes are hollow molecules composed only of carbon atoms. Fullerenes have the general formula C₂ₙ where n is equal to or greater than 16 (see, e.g., Curl and Smalley, Science, 242, 1017 (1988) ). The most abundant species of fullerene identified to date is the C₆₀ molecule. The face of C₆₀ consists of carbon atoms located at the vertices of 12 pentagons and 20 hexagons arranged with the symmetry of an icosahedron. The second most abundant species classified to date is C₇₀ and its face contains 12 pentagons and 25 hexagons. Other fullerenes containing from 32 to several hundred carbon atoms, in even numbers, have been detected by mass spectrometry. For further information concerning the structure of fullerenes, see, for example, H.W. Kroto et al., Chemical Reviews, 91, 1213 - 1235 (1991).

In once aspect, the present invention relates to novel compositions of matter, sulfated fullerenes. The sulfated fullerenes will contain primarily open chain sulfate and/or cyclic sulfate groups, but may contain, in addition, substituent groups selected from sulfonic acid groups, sultone groups, hydroxy groups and mixtures thereof. The foregoing fullerenes are collectively referred to as "sulfated fullerenes". In another aspect, the present invention also relates to the process of making a sulfated fullerene from a fullerene and fuming sulfuric acid, in amounts, for a time, and at a temperature effective to produce sulfated fullerenes. The invention includes the products produced by the process disclosed herein. The number and identity of the substituent groups in the novel sulfated fullerene compositions is influenced by the nature of the starting fullerene material, the particular composition of the fuming sulfuric acid, and the reaction conditions (e.g., temperature, time, etc.).

It is known that when C₆₀ is placed in protic superacid media such as fuming sulfuric acid (e.g., 20% free S0₃, see S.G. Kukolich, et al., Chemical Physics Letters, 182 Nos. 3, 4, 263 (1991) ) or Magic Acid (i.e., composites of FS0₃H and SbF₅ in varying proportions as known to one skilled in the art, see G. P. Miller, at al., Materials Res. Symp. Proceedings 247, 293 (1992) ), radical cations of C₆₀ are readily formed.

Our co-pending European Patent Application 92309875.0 (USSN 783 292) discloses contacting a fullerene mixture with an acidic medium, for example fuming sulfuric acid, followed by contact with a nitronium ion source to prepared polyhydroxy,-amino,-nitro, etc. fullerenes.

No references known to the Applicants, including those references mentioned herein for the formation of fullerene radical cations in fuming sulfuric acid or other oxidizing medium, disclose sulfated fullerenes or a process for preparing sulfated fullerenes.

The sulfated fullerenes described in the present invention may be used as metal binders, given that alkyl- and arylsulfates are known to those skilled in the art generally to have the ability to bind metals, or as solid acid catalysts. Moreover, the sulfated fullerenes show some solubility in water and have surfactant-like properties in this medium to the extent that they lower the surface tension of water.

Fullerenes may be purchased from commercial sources or may be synthesized by graphite volatilization, as described by W. Krätschmer, et al., Nature, 347, 353 (1990), and extracted from the resulting soot by toluene extraction, as described by D.M. Cox, et al., J. Am. Chem. Soc., 113, 2940 (1991). The resulting material generally contains from about 70% to about 85% C₆₀ and lesser amounts of higher fullerenes. All other materials described herein may be obtained from commercial sources and were used, as obtained, without further purification, unless otherwise specified. The fullerenes starting material may contain C₆₀ alone, higher fullerenes, or a mixture of the foregoing.

As used in this specification, the term "fullerene" means C₆₀ and all other similar hollow all-carbon molecules of the general formula C₂ₙ where n is equal to or greater than 16. The maximum value for n depends on the maximum size possible for a fullerene. According to the present state of the art a value for n of 210 is thought to be the maximum. This may increase in the future and it is not intended that n = 210 (i.e., C₄₂₀) should be regarded as a rigid limit. "Higher fullerenes" means fullerenes of greater molecular weight than C₆₀. For general background see G. S. Hammond, et al., ed., Fullerenes, Synthesis, Properties and Chemistry of Large Carbon Clusters, ACS Symposium Series 481 (1992).

As used herein, the term "open chain sulfate" refers to the functional group formed when a bisulfate anion, HSO₄₋, adds to a single carbon atom of the fullerene skeleton. In this way, the following group is formed:

〉̶C-O-SO₂-OH

The structure is analogous to, e.g., the corresponding alkyl hydrogen sulfates of tertiary alcohols.

As used herein, the term "cyclic sulfate" refers to the functional group formed when a bisulfate anion adds to two vicinal carbon atoms of the fullerene skeleton. In this way, the following group is formed:

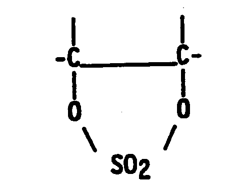

The cyclic sulfate structure is analogous to, e.g., the corresponding cyclic sulfates of vicinal diols.

According to the process of the present invention, the fullerenes are mixed with fuming sulfuric acid in amounts, for a time, and at a temperature effective to produce sulfated fullerenes. While not wishing to be bound by any particular mechanism of reaction, it is known that contacting the fullerenes with fuming sulfuric acid results in the formation of fullerene radical cations. In situ HSO₄-(bisulfate anion) nucleophilic trapping likely generates the sulfated fullerenes. More typically, the process of forming sulfated fullerenes is carried out by forming a mixture of an effective amount of fullerenes and fuming sulfuric acid in solution and reacting the mixture for a time and at a temperature sufficient to form the sulfated fullerenes. The foregoing can be accomplished either (1) by letting the mixture of fullerenes and fuming sulfuric acid stand at about room temperature (about 25°C) for several hours to several days; or (2) by heating the mixture at a temperature sufficient to produce the sulfated fullerenes in a shorter time, typically at temperatures from about 30°C to about 70°C. Thus typically, the process may be carried out at a temperature from about 25°C to about 100°C. Higher temperatures may also be used, but one must control gaseous SO₃ evolution in these cases, for example, by conducting the reaction in a closed vessel capable of withstanding elevated pressures. Selection of the appropriate temperature, pressure, and other reaction conditions may suitably be made by one skilled in the art given the teachings herein.

The process of the present invention produces fullerenes that are sulfated. In addition to containing open chain and cyclic sulfate groups, the sulfated fullerenes may contain at least one substituent group selected from the group consisting of sulfonic acid groups, sultone groups, hydroxy groups and mixtures thereof. Where the sulfated fullerenes contain a mixture of groups, open chain and cyclic sulfate groups will be present in larger proportions on average than sulfonic acid, sultone, and/or hydroxy groups. Generally, the process of the present invention produces fullerenes wherein on average the total number of open chain and cyclic sulfate groups is greater than the total number of other substituent groups specified above. More specifically, from about 80% to about 90% or more of the total number of substituent groups on average are typically cyclic sulfate and/or open chain sulfate groups, with the remaining additional substituent groups being selected from the those listed above.

The degree of sulfation that is achieved can be estimated by known analytical techniques such as NMR and IR. When the starting material is C₆₀, for example, the process of the present invention produces sulfated C₆₀. Typically, these have a total of from 1 to 8 additions primarily of cyclic and open chain sulfate groups. Where other substituent groups are present they are selected from sulfonic acid, sultone and hydroxy groups and mixtures thereof.

The sulfated fullerene composition may be isolated in the case of sulfated C₆₀, by precipitation out of solution as an or-ange/red solid. For those situations in which the sulfated fullerene composition does not precipitate out of solution, a nonpolar weakly basic solvent (e.g., diethyl ether) may be added in excess in order to initiate precipitation. If precipitation does not occur, a solvent-solvent liquid extraction may be performed on the neutralized acid solution which has been diluted with water. Diethyl ether and other ethers showing little or no solubility in water are particularly effective here. Appropriate solvents for isolation of the compositions may be readily selected by one having ordinary skill in the art.

Another embodiment of the present invention concerns novel compositions of matter comprising sulfated fullerenes and includes the products produced by the process of the present invention. The novel compositions of the present invention may be prepared from fullerenes and mixtures thereof as described above. The relative proportion of each type of sulfated fullerene will depend on the identity and proportion of the fullerenes contained in the starting material. However, as described in more detail above, the resulting novel composition will contain one or more sulfate substituent groups, typically from 1 to 8 substituent groups for C₆₀, while higher fullerenes may contain from 1 to 8 or more substituent groups. The number of substituent groups is influenced by the size of the starting fullerene, the exact proportions of sulfur trioxide and sulfuric acid in the fuming sulfuric acid, and the reaction conditions (e.g., temperature, reaction time). These may be supplied by one skilled in the art given the parameters and conditions taught herein. Further, where the sulfated fullerenes contain substituent groups that are additional to cyclic and/or open chain sulfate groups, these substituents will be selected from the group consisting of sulfonic acid, sultone, and hydroxy groups and mixtures thereof. The number of sulfonic acid, sultone, and hydroxy groups on each sulfated fullerene is, generally fewer, than the total number of sulfate groups (open chain and cyclic sulfate groups totaled) as judged by a variety of diagnostic techniques, (e.g., Fourier Transform Nuclear Magnetic Resonance (FT-NMR), Fourier Transform Infra-Red (FT-IR), thermogravimetric analyses (TGA) with FT-IR detection of evolved gases, Raman spectroscopy and Electron Spectroscopy for Chemical Analysis (ESCA)). Typically, open chain and cyclic sulfate groups will be present in larger proportions on average than sulfonic acid, sultone and/or hydroxy groups, more typically on average from about 80% to about 90% or more of the total number of the substituent groups are sulfate groups. Thus, typically the sulfated fullerene compositions of the present invention contain primarily open chain and cyclic sulfate substituent groups. Where other substituent groups are present they are selected from sulfonic acid, sultone and hydroxy groups and mixtures thereof.

The present invention will be further understood by reference to the following examples, which are intended to demonstrate the invention and not limit it in any way.

### Example 1

25.6 mg of pure C₆₀ was placed in a glass vial with a Teflon lined polypropylene cap. 3 ml of fuming sulfuric acid (ca. 30% free S0₃) was added in the open air. The vial cap was securely closed and the mixture was agitated manually to effect thorough mixing. Immediately upon mixing, the solution turned green, indicating the formation of a radical cation. The mixture was allowed to stand at room temperature for 7 days, during which time the color of the solution gradually turned from green to orange and an orange/red solid precipitated from the solution. The orange/red solid was separated from the orange liquid layer by decanting the liquid layer. The solid was then washed with water once and cold acetone three times. The remaining acetone adsorbed on the orange solid after washing was removed via evaporation. 26.0 milligrams of the orange/red solid was recovered in this way, 101.6% of the initial weight of C₆₀. The orange solid was characterized by FT-IR (strong absorptions centered at 1427, 1238, and 980 cm⁻¹ indicative of sulfate and/or cyclic sulfate groups), E.S.C.A. (electron spectroscopy for chemical analysis), strong signal at 169.4eV, as well as a weaker signal at 166.4eV indicating the presence of sulfate groups and to a lesser extent sulfonic acid and/or sultone groups, respectively, Magic Angle Spinning ¹H NMR (strong signal at 10-11 parts per million indicating the presence of open sulfate (i.e., C-O-SO₂-OH) and/or sulfonic acid (i.e., C-SO₃H) groups, as well as a broad signal at approximately 4-5 parts per million indicating the presence of hydrating water, and Magic Angle Spinning ¹³C NMR (strong broad signals in the region of 135-150 parts per million indicating the presence of unsaturated carbon atoms in the sulfated buckminster-fullerene cage, as well as a signal centered at approximately 70 parts per million indicating the presence of sulfate groups. In addition, the orange solid was characterized by Raman Spectroscopy (weak signal at 723 cm⁻¹) indicating the presence, but to a small extent, of sulfonic acid and/or sultone groups. Moreover, the solid was subjected to TGA (thermogravimetric analysis) with FT-IR detection of evolved gases. SO₂ was seen to readily evolve in a pure nitrogen (oxygen-free) environment at elevated temperatures proving the existence of sulfur containing functional groups on the solid. In addition, FT-IR analysis of the residual solid left behind after TGA analysis indicated the presence of ketone functional groups. While not wishing to be bound by a particular theory or mechanism, these data show that (1) ketone formation occurs only after SO₂ evolution in the TGA begins, and (2) the greater the SO₂ evolution, the more intense is the ketone absorption in the residual solid. Thus, upon heating, the cyclic sulfate functional groups are transformed into diketones with evolution of SO₂ gas. Moreover, the sulfated buckminsterfullerene exhibits a unique electrochemistry characteristic of a fullerene molecule with electron withdrawing functional groups attached. Thus, whereas C₆₀ exhibits five reversible reduction waves between 0.0 and -2.5 volts in DMSO/toluene solution, the sulfated buckminsterfullerene exhibits 6 reversible and 2 irreversible waves in the same solution.

### Example 2

The procedure of Example 1 was repeated 5 times utilizing 23.5, 28.0, 51.7, 29.6 and 38.3 milligrams of pure C₆₀ as reactant. Weights of recovered orange/red sulfated buckminsterfullerene product were 25.1, 30.9, 63.6, 33.8 and 54.4 milligrams, respectively. Thus, the average weight ratio of product to C₆₀ reactant was 1.19 for the five samples of Example 2 and the one sample from Example 1. The highest weight ratio was 1.42 and the lowest weight ratio was 1.02. All characterizations of products from the reactions described in Example 2 are consistent with those characterizations discussed in Example 1.

### Example 3

The procedure of Example 1 was repeated save that 50.0 milligrams of a typical C₆₀/C₇₀ mixture from a toluene extraction of vaporized carbon (i.e., soot made by the Krätschmer-Huffman method) was utilized instead of pure C₆₀. The yield of orange/red sulfated fullerenes was 55.1 mg. The characterization of the solid product revealed results consistent with those discussed in Example 1.

### Example 4

The procedure of Example 1 was repeated using pure C₆₀ (25.3 mg) and fuming sulfuric acid (3 ml) containing 27% free SO₃. 26.2 mg of an orange/red precipitate, the sulfated C₆₀, was recovered by centrifuge. The solid was washed as in Example 1. The orange red acid layer from which the precipitate was taken was then added dropwise to chipped ice resulting in the precipitation of further reaction product, another 4.7 mg. Elemental analysis revealed 48.9% C, 1.98% H, and 11.2% S matching well the expected percentages for the hexasulfate dodecahydrate structures C₆₀(OSO₃H)x(OSO₃)y(H₂O)₁₂ where the sum of x and y is 6.

## Claims

1. A process for preparing sulfated fullerene(s), comprising: forming a mixture of an effective amount of one or more fullerenes and fuming sulfuric acid; and reacting the mixture for a time and at a temperature sufficient to form sulfated fullerene(s).

2. The process according to claim 1, wherein the temperature is from about 25°C to about 100°C.

3. A composition, comprising one or more fullerenes having at least one sulfate substituent group selected from open chain sulfate groups, cyclic sulfate groups and mixtures thereof.

4. The composition according to claim 3, wherein the fullerene is C₆₀ and the number of sulfate substituent groups is a whole number from 1 to 8.

5. The composition according to claim 3, wherein the or each fullerene is selected from higher fullerenes, and the number of sulfate substituent groups is a whole number from 1 to at least 8.

6. The composition according to claim 5, wherein the or each higher fullerene is selected from C₇₀, C₇₆, C₇₈, C₈₂, C₈₄, C₉₀, C₉₆, and mixtures thereof.

7. A composition according to any one of claims 3 to 6, wherein the or each sulfated fullerene has at least one additional substituent group selected from sulfonic acid groups, sulfone groups, hydroxy groups, and mixtures thereof.

8. The composition according to claim 7 wherein the total number of the sulfate substituent groups is greater than the total number of the said additional substituent group(s).
